# EUROPÄISCHE PATENTSCHRIFT

(11) **EP 1 206 510 B1**
(45) Veröffentlichungstag und Bekanntmachung des Hinweises auf die Patenterteilung: **17.08.2005**
(21) Anmeldenummer: 00949303.2
(22) Anmeldetag: 11.07.2000
(51) Int. Cl.: C10L 3/00, E21B 37/06

(54) **PFROPFPOLYMERISATE ALS GASHYDRATINHIBITOREN**
GRAFTED POLYMERS AS GAS HYDRATE INHIBITORS
POLYMERISATS GREFFES UTILISES EN TANT QU'INHIBITEURS D'HYDRATES DE GAZ

(30) Priorität: 28.07.1999 DE 19935063
(43) Veröffentlichungstag der Anmeldung: 22.05.2002
(73) Patentinhaber: BASF AKTIENGESELLSCHAFT, 67056 Ludwigshafen (DE)
(72) Erfinder: ANGEL, Maximilian, D-67105 Schifferstadt (DE); NEUBECKER, Karin, D-67227 Frankenthal (DE); SANNER, Axel, D-67227 Frankenthal (DE)
(86) Internationale Anmeldenummer: PCT/EP2000/006564
(87) Internationale Veröffentlichungsnummer: WO 2001/009271

(56) Entgegenhaltungen:
- WO-A-96/29501
- US-A- 5 432 292

## Beschreibung

Die Erfindung betrifft Pfropfpolymerisate, bestehend aus einem hydrophilen Polymergrundgerüst mit mindestens einem Heteroatom in der Hauptkette und N-Vinyllactamen sowie gegebenenfalls einem weiteren Monomer aus der Gruppe N-Vinyllactame, N-Vinylamide, Acrylester, Acrylamide und/oder Vinylester als aufgepfropfte Einheit sowie die Verwendung dieser Pfropfpolymerisate als Gashydratinhibitoren.

Es ist bekannt, daß sich in Medien, die Gasmoleküle wie CO₂ oder Kohlenwasserstoffe, z.B. C₁-C₄-Alkane, und Wasser enthalten, unter bestimmten Bedingungen Gashydrate, auch als Clathrathydrate bezeichnet, bilden können. Diese Gashydrate bestehen aus den genannten Gasmolekülen, die von einem "Käfig" aus Wassermolekülen umgeben sind. Solche Gashydrate treten auch in Wasser-enthaltenden Erdöl- oder Erdgasgemischen auf und können so z.B. beim Transport zu Verstopfung der Pipelines führen.

Um dies zu verhindern, werden den Erdöl- oder Erdgasmischungen Gashydratinhibitoren zugesetzt.

Aus der WO 96/41784 und WO 96/41785 sind Gashydratinhibitoren bekannt, die aus einem Copolymer des N-methyl-N-vinylacetamids (VIMA) bestehen.

Aus der US 5 420 370, US 5 432 292, WO 94/12 761 und der WO 95/32 356 sind polymere Additive zur Verhinderung von Clathrathydraten in flüssigen Systemen bekannt, die ein Comonomer mit einem Lactamring im Polymer aufweisen.

Daneben offenbart die WO 96/29501 Gashydratinhibitormischungen, welche als aktive Komponente ein Polymer auf Basis von ethylenisch ungesättigten N-heterocyclischen Carbonylverbindungen enthalten, deren heterocyclische Carbonylverbindungen 6 bis 8 Ringatome aufweisen. Optional können diese ausschließlich aus Kohlenstoffatomen in der Hauptkette aufgebauten Polymeren noch mit weiteren ethylenisch ungesättigten N-heterocyclischen Carbonylverbindungen gepfropft werden, deren heterocyclische Carbonylverbindungen allerdings 5 bis 7 Ringatome aufweisen.

Insbesondere Polyvinylcaprolactam, aber auch Copolymere des Polyvinylcaprolactams mit z.B. Vinylpyrrolidon besitzen in wäßriger Lösung einen Trübungspunkt, d.h. eine bestimmte Temperatur, bei der das Polymer ausfällt (inverse Löslichkeit). Für reines Polyvinylcaprolactam beträgt diese Temperatur ca. 30 bis 35°C. Eine solche geringe Trübungstemperatur ist bei der Anwendung als Gashydratinhibitor unter Umständen von Nachteil, da das Polymer in der zu fördernden Gas/Öl/Wasser-Phase ausfallen kann, wenn diese Phase (das heißt auch das Wasser dieser Phase) eine erhöhte Temperatur besitzt, was in der Praxis durchaus vorkommen kann. Vielfach werden deshalb Copolymerisate des Vinylcaprolactams mit z.B. Vinylpyrrolidon oder auch anderen, den Trübungspunkt erhöhenden, hydrophilen Monomeren, z.B. auch ionischen Monomeren, die ionische Gruppen wie Carboxylgruppen, Sulfonatgruppen oder (quarternisierte) Ammoniumgruppen tragen, verwendet (WO 96/38492).

Aus der WO 96/38492 sind Gashydratinhibitoren bekannt, die ein Polymer enthalten, das einen 3- bis 15-gliedrigen Ring aufweist, der über ein bestimmtes Verbindungsglied (spacer) an das Polymergerüst gebunden ist.

Pfropfpolymere an sich sind aus dem Stand der Technik bekannt. So beschreiben die deutschen Patentschriften DBP 1077430, 1081229, 1084917 und 1094457 Verfahren zur Herstellung verschiedener Pfropfpolymerisate wie zum Beispiel Pfropfpolymerisate von Polyvinylestern oder modifizierte Polyvinylalkohole. Die EP 285 038 offenbart die Verwendung von Pfropfpolymerisaten auf Basis von Polyalkylenoxiden als Vergrauungsinhibitoren. Die EP 44 995 offenbart Pfropfpolymere des PVA.

Aufgabe der vorliegenden Erfindung ist es, Polymere für die Verwendung als Gashydratinhibitoren zur Verfügung zu stellen, die mit hoher Wirtschaftlichkeit herstellbar und variabel auf verschiedene technische Anforderungen einstellbar sind. Dazu müssen die Polymere so aufgebaut sein, daß sie mit unterschiedlichen Grenzflächen oder Oberflächen, insbesondere in komplexen Gas-Wasser-Gemischen, bei unterschiedlichen Temperaturen so wechselwirken, daß sich keine Gashydrate bilden, wobei zum Aufbau der Polymeren auch leicht verfügbare Monomere eingesetzt werden können. Aufgabe ist es insbesondere, verbesserte Gashydratinhibitoren zur Verfügung zu stellen, welche über einen großen Temperaturbereich wirksam sind und daher einen hohen Trübungspunkt und eine niedrige Einfriertemperatur aufweisen.

Die Aufgabe wird gelöst durch die Verwendung der eingangs definierten Pfropfpolymerisate als Gashydratinhibitoren.

Das Konzept, Pfropfpolymere als Gashydratinhibitoren einzusetzen, ermöglicht maßgeschneidert einzelne Polymerkomponenten wie das Polymergrundgerüst (auch "Pfropfgrundlage" genannt) und die aufzupfropfenden Monomere auch bezüglich ihrer räumlichen Anordnung optimal aufeinander abzustellen.

Die Pfropfpolymerisate können als Ganzes wasserlöslich sein oder nur wasserdispergierbar. Sofern mit den üblichen Techniken eine Dispersion der Polymere in Wasser erzeugt werden kann, können die eingesetzten Pfropfpolymerisate für sich auch wasserunlöslich sein, wasserlösliche Pfropfpolymerisate sind jedoch bevorzugt. Die erfindungsgemäß verwendeten Pfropfpolymerisate können auch als sogenannte "Kammpolymere" vorliegen.

Die Pfropfpolymerisate können als Grundgerüst sowohl ein hydrophiles als auch ein hydrophobes Polymer aufweisen, wobei hydrophile Polymere als Grundgerüst bevorzugt sind. Es sind auch Polymere mit einem hydrophoben und einem hydrophilen Teil möglich. Als aufgepfropfte Einheiten kommt eine Vielzahl von Monomeren in Betracht. Gerade diese Variabilität des Systems macht einen Vorteil der vorliegenden Erfindung aus.

So können die Pfropfpolymerisate mit einer Reihe von Lösungsmitteln in Gemischen zur Gashydratinhibierung eingesetzt werden.

Als Lösungsmittel für die Gashydratinhibitoren können Alkohole, z.B. Methanol, Isopropanol oder Butylglykol, aber auch Ether, insbesondere teilveretherte Glykole, verwendet werden, wobei bei einigen Lösungsmitteln synergistische Effekte möglich sind (siehe auch WO 98/19980). Aus Gründen der Handhabung, z.B. wegen Sicherheitsrisiken, und aus toxikologischen Gründen werden Lösungsmittel mit einem hohen Flammpunkt und geringer Wassergefährdungsklasse, wie z.B. Wasser oder Ethylenglykol, bevorzugt.

Die mögliche Verwendung von Wasser ist als besonderer Vorteil der erfindungsgemäßen Verwendung der Pfropfpolymere anzusehen.

Aber auch Ethylenglykol kommt in Frage, das als chemisch enger Verwandter einiger bevorzugter Pfropfpolymerisate anzusehen ist. Als nachträglich (aus Gründen der Viskosität) zugegebenes Lösungsmittel kommen aber auch niedermolekulare Polyalkylenglykole, insbesondere Polyethylenglykol in Frage. Deren Vorteil liegt darin, daß sie einen hohen Flammpunkt (ca. 111°C bei Ethylenglykol), aber auch eine gute Aquatox aufweisen.

Selbst als Lösemittel für einen gegebenenfalls verwendeten organischen Starter (organisches Peroxid) bei der Herstellung der Pfropfpolymere und für bei Raumtemperatur nicht flüssiges Monomer wie Vinylcaprolactam kann ein (niedermolekulares, flüssiges) Polyalkylenglykol, vorzugsweise Polyethylenglykol, verwendet werden.

Eine Möglichkeit, die Löslichkeit oder zumindest Dispergierbarkeit der Pfropfpolymere in Wasser oder anderen polaren Lösungsmitteln zu erreichen, ist der Einsatz eines hydrophilen Grundgerüsts für das Pfropfpolymer. Als derartiges Grundgerüst kommen in Frage Polyalkylenglykole, Polyvinylalkohole, Polyvinylamide, Polyvinylpyrrolidon, Polyether, Polyester, Polyurethane, Polyacrylamid, Polysaccharide wie z.B. Stärke, Alginate, Pectine, Pflanzengummis, Caseine, Gelatine, Celluloseether wie z.B. Methylcellulose, Stärkeether, Polyalkylenimine, Polycarbonsäuren, Polyvinylsulfonsäuren oder Polyvinylphosphonsäuren oder Copolymere davon. Bevorzugt sind Polyalkylenglykole, insbesondere Polyethylenglykole, Polyethylenimine, Polyvinylalkohole, Polyvinylpyrrolidon und Polyvinylamin.

Als hydrophobe Polymergrundgerüste kommen in Frage: Polyalkylenglykole, wie Ethylenoxid/Propylenoxid-Co- oder Blockcopolymere, Polyether, Poly(meth)acrylsäureester, Polyolefine wie z.B. Polyethylen, Polypropylen, Polyisobutylen, Polybutadien, Polyisopren, Polystyrol und Styrolcopolymere, Polyvinylacetat, Polyvinylether, Polyvinylformale, Polyvinylacetale, Polyvinylchlorid oder andere halogenierte Polyvinylverbindungen wie z.B. Polyvinylidenchlorid, Polychloropren, Polytrifluorchlorethylen, Polytetrafluorethylen, Polyacrylnitril, Polyamid, Polyurethane, Silicone, Polycarbonat, Polyterephthalat, Cellulose oder Celluloseester oder Polyoxymethylen oder Copolymere davon.

Bestimmte Polymere können je nach Zusammensetzung sowohl hydrophilen als auch hydrophoben Charakter haben. Es ist dem Fachmann geläufig, wie er die Zusammensetzung wählen muß, um dies jeweils zu erreichen.

Als aufpfropfbare Einheiten kommen Monomere in Frage, die an sich entweder wasserlöslich oder wasserunlöslich sind. Bevorzugt als Monomere sind N-Vinyllactame, N-Vinylamide, insbesondere N-Vinyl-N-methylacetamid, Acrylester, Acrylamide und/oder Vinylester, wobei N-Vinyllactame, insbesondere N-Vinylcaprolactam, besonders bevorzugt sind.

Die aufgepfropften Einheiten machen in der Regel 10 bis 90 Gew.-%, bevorzugt 25 bis 75 Gew.-%, besonders bevorzugt 40 bis 60 Gew.-% des Pfropfcopolymeren aus.

Besonders vorteilhaft lassen sich Pfropfpolymerisate einsetzen, die ein hydrophiles Polymergrundgerüst und N-Vinyllactame als aufgepfropfte Einheit aufweisen.

Die Erfindung betrifft daher auch Pfropfpolymerisate mit hydrophilen Polymeren mit mindestens einem Heteroatom in der Hauptkette als Grundgerüst und als aufgepfropfte Einheit N-Vinylcaprolactam sowie gegebenenfalls ein weiteres oben genanntes Monomer.

Erfindungsgemäß bevorzugt sind Pfropfpolymerisate mit einem Polyalkylenglykol, einem Polyalkylenimin, einem Polyether oder einem Polyurethan als Grundgerüst. Besonders bevorzugt ist Polyethylenglykol als Polymergrundgerüst und N-Vinylcaprolactam oder N-Vinylcaprolactam/Vinylacetat als aufgepfropftes Monomer.

Die erfindungsgemäß verwendeten Pfropfpolymerisate lassen sich in an sich bekannter Weise herstellen, wie z.B. in den DE 1 077 430 oder 1 084 917 beschrieben.

Gemäß diesen Druckschriften wird zunächst (in der Regel) eine Mischung aus Monomer (Vinylacetat)/Polyalkylenglykol/Initiator) hergestellt, was jedoch prinzipielle Sicherheitsfragen aufwirft. Dann wird ein Teil der Mischung anpolymerisiert, der Rest wird über einen Zulauf zugegeben und - gegebenenfalls unter Zusatz von Lösungsmittel - fertigpolymerisiert.

Auch das in der EP 0 219 048 beschriebene Verfahren (Seite 2, Zeilen 49 ff.) kann eingesetzt werden, wobei z.B. Polyalkylenoxid vorgelegt wird und Monomer (Vinylacetat) und Starter auf einmal, absatzweise oder kontinuierlich zugefügt werden. Auch das zur Herstellung der Pfropfpolymerisaten in der EP 0 285 038 (Polyalkylenoxid, Vinylpyrrolidon, Vinylester) beschriebene Verfahren ist zur Herstellung der erfindungsgemäß verwendeten Polymerisate geeignet.

Bevorzugt werden die erfindungsgemäß verwendeten Pfropfpolymerisate so hergestellt, daß die Gesamtmenge oder die überwiegende Menge an Grundpolymer, z.B. Polyethylenglykol mit einem Molekulargewicht von typisch 200 bis 40000, bevorzugt 600 bis 10000, besonders bevorzugt 1500 bis 6000 g/mol, in einen gerührten Reaktor vorgelegt und, gegebenenfalls bis zur Verflüssigung, aufgeheizt wird. Dann wird das Monomer, z.B. Vinylcaprolactam - gegebenenfalls in einer Abmischung mit einem Lösungsmittel, z.B. Ethylenglykol, - und ein peroxidischer Starter (z.B. tertiär-Butylperoxi-2-ethylhexanoat) - gegebenenfalls in einer Abmischung mit einem Lösungsmittel, z.B. Methanol - in getrennten Zuläufen bei einer Temperatur der Vorlage von z.B. 80°C über mehrere Stunden zudosiert. Sollte die Viskosität im Verlauf der Reaktion zu hoch werden, kann eine entsprechende Menge eines Lösungsmittels, bevorzugt Wasser oder Ethylenglykol, zugegeben werden. Die Zugabe kann entweder bereits vor oder zu Beginn der Pfropfreaktion erfolgen, vorzugsweise jedoch zu einem möglichst späten Zeitpunkt während der Pfropfreaktion, am besten erst nach Abschluß der Pfropfreaktion. Die zudosierte Menge an Lösungsmittel sollte möglichst gering gehalten werden.

Nach Abschluß der Reaktion kann nachpolymerisiert werden, z.B. durch Zugabe eines weiteren Initiators, gegebenenfalls auch unter Druck bei erhöhter Temperatur.
Das fertige Polymerisat kann mit jedem beliebigen Lösungsmittel verdünnt werden; vorzugsweise empfiehlt sich eine Verdünnung mit Wasser oder Ethylenglykol oder einer Mischung aus beiden.

Der Umsatz der Pfropfreaktion läßt sich in vielen Fällen am besten indirekt dadurch bestimmen, daß die Trübungstemperatur des Pfropfpolymerisats im Vergleich zu einem nicht nichtgepfropften Polymerisat bestimmt wird. Üblicherweise wird hierzu das Polymerisat getrocknet und aus dem trockenen Polymerisat z.B. eine wäßrige Lösung hergestellt, deren Eintrübung bzw. Ausfallen des Polymerisats als Funktion der Temperatur in einfacher Weise bestimmt werden kann.

Der Trübungspunkt kann gemäß der DIN 53 917 bestimmt werden.

Die Pfropfpolymerisate können zur Verwendung als Gashydratinhibitoren auch mit anderen geeigneten Mitteln in Kombination eingesetzt werden.

Diese anderen Mittel können andere Polymere wie Hydroxyalkylcellulosen, Polyvinylpyrrolidon oder Polyvinylcaprolactam, aber auch Alkohole, wie Methanol, Ethanol oder Ethylenglykol oder wasserlösliche Salze, bevorzugt in einer Menge von 1 bis 3,5 Gew.-% bezogen auf das Gewicht des gesamten flüssigen Systems, sein.

Gegenstand der Erfindung ist auch ein Verfahren zur Verhinderung oder Verminderung der Bildung von Gashydraten in flüssigen oder gasförmigen Systemen, das dadurch gekennzeichnet ist, daß den flüssigen Systemen ein Pfropfpolymer zugegeben wird.

Die K-Werte der erfindungsgemäß eingesetzten Pfropfpolymeren (bestimmt nach Fikentscher, Cellulose Chemie, 13, 58-64, 71-74, 1932; 1%ige wässrige Lösung, 20°C, K = k·10³) betragen 10 bis 120, bevorzugt 15 bis 90, insbesondere 20 bis 60. Die Molekulargewichte der Pfropfpolymeren (M_{w}) betragen 2000 bis zu 1 000 000, bevorzugt 5000 bis 300 000, besonders bevorzugt 10 000 bis 100 000.

Die erfindungsgemäß als Gashydratinhibitoren verwendbaren Pfropfpolymerisate sind sowohl in rein wäßriger Lösung als auch in Lösungsmittelgemischen, z.B. Wasser/Alkohol, insbesondere Ethylenglykol, einsetzbar. Nach Abtrennung des Lösungsmittels und gegebenenfalls Trocknung sind die Polymeren auch in Pulverform einsetzbar. Wenn die Pfropfpolymeren einen hydrophilen Charakter aufweisen, sind derartige Pulver für den erfindungsgemäßen Zweck an der Stelle ihres Einsatzes in den Wasser enthaltenden Medien, die zur Gashydratbildung neigen, gut redispergierbar bzw. gut wieder auflösbar.

Die Polymere werden den flüssigen Systemen, d.h. den Erdöl- oder Erdgasgemischen in den üblichen Mengen zugesetzt, die der Fachmann den jeweiligen Gegebenheiten anpaßt.

### Beispiele

### Beispiel 1

| | | g | Gew.-% | |
|---|---|---|---|---|
| Vorlage | Pluriol E 6000 | 300 | 50 | |
| Zulauf 1 | Vinylcaprolactam Vinylacetat | 150 150 | 25 25 | |
| Zulauf 2 | tert.-Butylperoxi-2-ethylhexanoat (98 %ig) Methanol | 4 30 | =1,3 % | bezogen auf Monomere |
| Zulauf 3 | VE-Wasser | 900 | | |

Pluriol E 6000: Polyethylenglykol mit MG 6000

Die Vorlage wurde in einer 2-1-HWS-Rührapparatur unter leichtem Stickstoffstrom bei 150 upm gerührt und auf 100°C Außentemperatur aufgeheizt.

Nachdem das Polyethylenglycol mit Molekulargewicht 6000 (Pluriol E 6000, BASF AG) in der Vorlage vollständig geschmolzen ist, wurde 10 % vom Zulauf 2 zur Vorlage zugegeben und 5 min gerührt. Danach wurden die Zuläufe 1 und 2 in jeweils 5 h zugetropft. Nach dem Ende der Zuläufe wurde 3 h nachpolymerisiert. Danach wurde der Zulauf 3 in 30 min. zugegeben und dann abgekühlt.

| | |
|---|---|
| Feststoffgehalt Gew.-% | 38,1 |
| K-Wert | 21,6 (gemessen 1 %ig in Ethanol) |

### Beispiel 2

Herstellung analog Beispiel 1, Versuch bei 100°C Außentemperatur. Vgl. Tabelle 1.

### Beispiel 3

| | | g | Gew.-% | |
|---|---|---|---|---|
| Vorlage | PTHF 1000 * Teilmenge Zulauf 2 | 180 7 | 30 | |
| Zulauf 1 | Vinylacetat Vinylpyrrolidon | 60 315 | 10 52,5 | |
| Zulauf 2 | tert.-Butylperoxi-2-ethylhexanoat (98 %ig) Methanol | 4,5 45 | =1,1 % | bezogen auf Monomere |
| Zulauf 3 | Vinylpyrrolidon | 45 | 7,5 | |
| Zulauf 4 | tert.-Butylperoxi-2-ethylhexanoat (98 %ig) Methanol | 1,3 13 | =0,3 % | bezogen auf Monomere |
| Zulauf 5 | VE-Wasser | 880 | | |

| | | | | |
|---|---|---|---|---|
| * Polytetrahydrofuran mit MG 1000 (hydrophob) | | | | |

Der Versuch wurde in einem gerührten 6-1-Juvo-Kessel durchgeführt. Der Kessel wurde 3 mal mit 10 bar Stickstoff abgedrückt. Die Vorlage wird mit der Teilmenge Zulauf 2 auf ca. 95°C Innentemperatur aufgeheizt. Bei 95°C wurden die Zuläufe 1 und 2 gestartet. Der Zulauf 1 wurde in 6 h, der Zulauf 2 in 8 h zudosiert. Nach Ende des Zulaufs 1 wurde der Zulauf 3 in 1,5 h zudosiert. Nach Ende des Zulaufs 2 wurde 1 h nachpolymerisiert. Der Zulauf 4 wurde in 2 h bei (weiterhin) 95°C zudosiert. Nach Ende des Zulauf 4 wurde noch 3 h bei 95°C nachpolymerisiert. Danach wurde der Zulauf 5 in 30 min. zugeben und dann abgekühlt.

### Beispiel 4

Herstellung analog Beispiel 1, Versuch bei 90°C Außentemperatur. Vgl. Tabelle 1.

### Beispiel 5

Herstellung analog Beispiel 1 (im Gegensatz zu Beispiel 1 braucht PTHF 250 (Polytetrahydrofuran mit MG 250, hydrophil) - eine klare Lösung - nicht mehr aufgeschmolzen werden). Versuch bei 100°C Außentemperatur. Vgl. Tabelle 1.

### Beispiel 6

Herstellung analog Beispiel 1, Versuch bei 80°C Außentemperatur. Vgl. Tabelle 1.

Da der Versuch nach Ende der Zuläufe 1 und 2 sehr viskos wurde, wurde eine Teilmenge des Zulaufs 3 (300 g Wasser) bereits während der Nachpolymerisation zugegeben. Die Restmenge Wasser wurde vor dem Abkühlen zugegeben.

**Tabelle 1**

| Zusammensetzung der Beispielversuche | | | | | | | | | |
|---|---|---|---|---|---|---|---|---|---|
| Bsp. | Initiator | | PG** | | VCap | VAc | VP | K-Wert *** | FG |
| | Typ | G.-%* | | G.-% | G.-% | G.-% | G.-% | | G.-% |
| | | | | | | | | | |
| 1 | tBPEHA | 1,3 | Pluriol E 6000 | 50 | 25 | 25 | | 21,6 | 38,1 |
| 2 | tBPEHA | 1,6 | Pluriol E 6000 | 60 | 40 | | | 22,8 | 40,1 |
| 3 | tBPEHA | 1,4 | 1000 | 30 | | 10 | 60 | 22,9 | 38,5 |
| 4 | tBPPiv | 1,3 | Pluriol E 6000 | 50 | 40 | 10 | | 23,9 | 39,3 |
| 5 | tBPEHA | 1,2 | PTHF 250 | 35 | 30 | | 35 | 22,5 | 40,1 |
| 6 | tBPPiv | 1,4 | Pluriol E 6000 | 50 | 30 | | 20 | 26,4 | 40,4 |

| | | | | | | | | | |
|---|---|---|---|---|---|---|---|---|---|
| * bezogen auf Monomer | | | | | | | | | |
| ** PG = Pfropfgrundlage | | | | | | | | | |
| *** 1%ig in Ethanol G.-% Gewichts-% tBPEHA tertiär-Butylperoxi-2-ethylhexanoat tBPPiv tertiär-Butylperoxipivalat PTHF (250) Polytetrahydrofuran (Molgewicht) VCap Vinylcaprolactam VAc Vinylacetat VP Vinylpyrrolidon FG Feststoffgehalt | | | | | | | | | |

**Tabelle 2**

| Einfriertemperatur-Ergebnisse (Ballstop-Methode) und Trübungspunkte (0,5 Gew.-% Polymer in Wasser) | | | |
|---|---|---|---|
| Beispiel | Ball-stop °C | Trübungspunkt °C | Bemerkungen |
| Vergleich 1 | 4,0 | --- | Nullwert Ballstop (ohne Polymer) |
| Vergleich 2 | 0,5 | 32 | Vinylcaprolactam-Homopolymer (K-Wert 20) |
| Vergleich 3 | 3,0 | > 100 | Vinylpyrrolidon-Homopolymer (K-Wert 20) |
| | | | |
| 1 | 2,0 | 80 | |
| 2 | 1,5 | 90 | Bei 50°C minimale Trübung (verschwindet wieder) |
| 3 | 2,5 | 90 | Geringfügig getrübt |
| 4 | 1,5 | 90 | Bei 40°C minimale Trübung (verschwindet wieder) |
| 5 | 1,0 | 75 | |
| 6 | 1,5 | 65 | |

Die "Einfrier-Temperatur" wurde nach der "Ball-Stop-Methode" analog der in Beispiel 1 der W095/32356 beschriebenen Testmethode gemessen.

Diese Methode bezieht sich auf zu prüfende Einfrierpunkte von Wasser/THF-Gemischen durch Zusatz verschiedener Polymere (Nachweis der Hydratbildung), die 0,5%ig in einem Wasser/THF(81/19 Gew.-%)-Gemisch eingefroren werden.

Zur Ermittlung des Einfrierpunktes verschiedener Polymere/(Wasser/THF)-Gemische sind folgende Gerätschaften, sowie Reagenzien nötig:
- Wasser/THF-Gemisch (81/19 Gew.-%)
- Julabo F 18 Temperierbad mit Kältemischung Wasser/Ethylenglykol (5/1)
- Multifix-Constant-Rührer
- Halterung für Reagenzgläser (5 ml)
- Edelstahlkügelchen zur besseren Durchmischung im Reagenzglas

Es wird eine 0,5%ige Lösung des zu untersuchenden Polymers in Wasser/THF (81/19) hergestellt. Das Reagenzglas wird zu 2/3 gefüllt, mit einem Edelstahlkügelchen versehen, verschlossen und in der Reagenzglashalterung befestigt. Die Messung wird bei 4°C Badtemperatur und einer Umdrehungsgeschwindigkeit von 20 upm gestartet und stündlich die Temperatur um 0,5°C erniedrigt bis die Probe eingefroren ist bzw. sich die Stahlkugel im Reagenzglas nicht mehr bewegt oder die Temperatur von 0°C erreicht ist. Parallel zu jeder Messung läuft eine Blindprobe.

## Patentansprüche

1. Pfropfpolymerisate, bestehend aus einem hydrophilen Polymergrundgerüst mit mindestens einem Heteroatom in der Hauptkette und N-Vinyllactamen sowie gegebenenfalls einem weiteren Monomer aus der Gruppe N-Vinyllactame, N-Vinylamide, Acrylester, Acrylamide und/oder Vinylester als aufgepfropfte Einheit.

2. Pfropfpolymerisate nach Anspruch 1, **dadurch gekennzeichnet, daß** das hydrophile Polymergrundgerüst ein Polyalkylenglykol, ein Polyalkylenimin, ein Polyether oder ein Polyurethan ist.

3. Pfropfpolymerisate nach Anspruch 2, **dadurch gekennzeichnet, daß** das hydrophile Polymergerüst Polyethylenglykol ist.

4. Pfropfpolymerisate nach Anspruch 1, **dadurch gekennzeichnet, daß** die aufgepfropfte Einheit N-Vinylcaprolactam sowie gegebenenfalls ein Vinylester ist.

5. Verfahren zur Verhinderung oder Verminderung der Bildung von Gashydraten in flüssigen oder gasförmigen Systemen, **dadurch gekennzeichnet, daß** den flüssigen oder gasförmigen Systemen ein Pfropfpolymer gemäß einem der Ansprüche 1 bis 4 zugesetzt wird.

6. Verwendung von Pfropfpolymerisaten gemäß einem der Ansprüche 1 bis 4 als Gashydratinhibitoren.

7. Verwendung nach Anspruch 6, **dadurch gekennzeichnet, daß** als hydrophiles Polymergrundgerüst Polyalkylenglykole, Polyether, Polyester, Polyurethane, Polysaccharide, Celluloseether, Polyalkylenimine oder Copolymerisate davon eingesetzt werden.

8. Verwendung nach Anspruch 6, **dadurch gekennzeichnet, daß** die Pfropfpolymerisate als aufgepfropfte Einheiten wasserlösliche und/oder wasserunlösliche Monomere enthalten.

9. Verwendung nach Anspruch 8, **dadurch gekennzeichnet, daß** die aufgepfropften Einheiten 10 bis 90 Gew.-% des Pfropfpolymerisats ausmachen.

## Claims

1. A graft polymer composed of a hydrophilic base polymer having at least one heteroatom in the main chain and of N-vinyllactams and also, if desired, of a grafted-on unit comprising another monomer from the group of N-vinyllactams, N-vinylamides, acrylates, acrylamides, and/or vinyl esters as grafted-on unit.

2. A graft polymer as claimed in claim 1, wherein the hydrophilic base polymer is a polyalkylene glycol, a polyalkyleneimine, a polyether or a polyurethane.

3. A graft polymer as claimed in claim 2, wherein the hydrophilic polymer is polyethylene glycol.

4. A graft polymer as claimed in claim 1, wherein the unit grafted on is N-vinylcaprolactam or else, if desired, a vinyl ester.

5. A process for preventing or reducing the formation of gas hydrates in liquid or gaseous systems, which comprises adding a graft polymer as claimed in one of claims 1 to 4 to the liquid or gaseous systems.

6. The use of graft polymers as claimed in one of claims 1 to 4 as gas hydrate inhibitors.

7. The use as claimed in claim 6, wherein the hydrophilic base polymers are polyalkylene glycols, polyethers, polyesters, polyurethanes, polysaccharides, cellulose ethers, polyalkyleneimines, or copolymers of these.

8. The use as claimed in claim 6, wherein the graft polymers contain grafted-on units of water-soluble and/or water-insoluble monomers.

9. The use as claimed in claim 8, wherein the units grafted on make up from 10 to 90% by weight of the graft polymer.

## Revendications

1. Polymères greffés, constitués d'un squelette de base de polymère hydrophile comportant au moins un hétéroatome dans la chaîne principale et de N-vinyllactames ainsi qu'éventuellement d'un autre monomère du groupe des N-vinyllactames, N-vinylamides, esters acryliques, acrylamides et/ou esters vinyliques, comme unité greffée.

2. Polymères greffés suivant la revendication 1, **caractérisés en ce que** le squelette de base de polymère hydrophile est un polyalkylèneglycol, une polyalkylèneimine, un polyéther ou un polyuréthanne.

3. Polymères greffés suivant la revendication 2, **caractérisés en ce que** le squelette de polymère hydrophile est du polyéthylèneglycol.

4. Polymères greffés suivant la revendication 1, **caractérisés en ce que** l'unité greffée est du N-vinylcaprolactame ainsi qu'éventuellement un ester vinylique.

5. Procédé pour empêcher ou réduire la formation d'hydrates de gaz dans des systèmes liquides ou gazeux, **caractérisé en ce qu'**aux systèmes liquides ou gazeux, on ajoute un polymère greffé suivant l'une des revendications 1 à 4.

6. Utilisation de polymères greffés suivant l'une des revendications 1 à 4, comme inhibiteurs d'hydrates de gaz.

7. Utilisation suivant la revendication 6, **caractérisée en ce que**, comme squelette de base de polymère hydrophile, on met en oeuvre des poly-alkylèneglycols, des polyéthers, des polyesters, des polyuréthannes, des polysaccharides, des éthers cellulosiques, des polyalkylèneimines ou leurs copolymères.

8. Utilisation suivant la revendication 6, **caractérisée en ce que** les polymères greffés contiennent, comme unités greffées, des monomères solubles dans l'eau et/ou insolubles dans l'eau.

9. Utilisation suivant la revendication 8, **caractérisée en ce que** les unités greffées représentent 10 à 90% en poids du polymère greffé.
